(19) Europäisches Patentamt
European Patent Office
Office européen des brevets

(11) Veröffentlichungsnummer: **0 220 641**
**B1**

# (12) EUROPÄISCHE PATENTSCHRIFT

(45) Veröffentlichungstag der Patentschrift: **28.02.90**

(51) Int. Cl.[5]: **C 07 C 211/50, C 08 G 18/38**

(21) Anmeldenummer: **86114504.3**

(22) Anmeldetag: **20.10.86**

(54) **Substituierte p,p'-Methylen-bis-aniline.**

(30) Priorität: **23.10.85 CH 4562/85**

(43) Veröffentlichungstag der Anmeldung: **06.05.87 Patentblatt 87/19**

(45) Bekanntmachung des Hinweises auf die Patenterteilung: **28.02.90 Patentblatt 90/09**

(84) Bennante Vertragsstaaten: **AT BE CH DE FR GB IT LI LU NL SE**

(56) Entgegenhaltungen:
**EP-A-0 088 667**
**EP-A-0 171 588**
**DE-A-2 339 237**
**DE-B-1 205 975**

(73) Patentinhaber: **LONZA AG**
**Gampel/Wallis (CH)**

(72) Erfinder: **Althaus, Hans, Dr.**
**Holzackerweg 6**
**Gils Kanton Wallis (CH)**
Erfinder: **Völker, Theodor, Dr.**
**Kleestrasse 7**
**Reinach Kanton Baselland (CH)**
Erfinder: **Schmidt, Andreas, Dr.**
**Hubackerweg 32**
**Reinach Kanton Baselland (CH)**

(74) Vertreter: **Weinhold, Peter, Dr.**
**Patentanwälte Dipl.-Ing. G. Dannenberg Dr. P. Weinhold Dr. D. Gudel Dipl.-Ing. S. Schubert Dr. P. Barz**
**Siegfriedstrasse 8**
**D-8000 München 40 (DE)**

**EP 0 220 641 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBERGRAF, STOCKHOLM 1990

**Beschreibung**

Die Erfindung betrifft neue Ames-Test-negative Kettenverlängerungsmittel oder Vernetzungsmittel für Polyurethane.

Die Herstellung von Polyurethanen nach dem Isocyanat-Polyadditionsverfahren ist bekannt. Beispielsweise werden Verbindungen mit reaktionsfähigen Wasserstoffatomen, wie Polyester mit endständigen OH-Gruppen, mit Diisocyanaten zu einem Prepolymer umgesetzt (DE-PS-1 240 654), welches dann in einem zweiten Schritt mit einem Kettenverlängerungsmittel oder Vernetzungsmittel, üblicherweise einem aromatischen Diamin, zur Reaktion gebracht wird. Die entstehende giessfähige Reaktionsmasse kann dann in einer Form über längere Zeit ausgehärtet werden. Es ist dabei Voraussetzung, dass die Prepolymere mit den Kettenverlängerungsmitteln oder Vernetzungsmitteln nicht allzu schnell reagieren, damit eine angemessene Verarbeitungszeit in der flüssigen Phase gewährleistet ist. Zu diesem Zweck haben sich vor allem primäre und sekundäre Di- und Polyamine, bevorzugt die aromatischen Diamine, angeboten. Man hat erkannt, dass sich die besten Verarbeitungseigenschaften erzielen lassen, wenn sich in ortho-Stellung zur Aminogruppe ein Substituent befindet. Mit diesen Verbindungen, allen voran das 4,4'-Methylen-bis-(2-chlor-anilin) (MOCA) ist es möglich, Elastomere mit besonders guten Eigenschaften bei angenehmer Verarbeitungszeit zu erreichen [Wright et al., Solid Polyurethane Elastomers, S. 125, Mac Laren London, 1969].

Ein schwerwiegender Nachteil des MOCA, der zu dessen Verbot in einigen Ländern führte, ist aber seine Cancerogenität und Mutagenität, nachgewiesen durch den positiven Ames- Test [Ames et al., Proc. Nat. Acad. Sci. USA 70 (1973) 782, 2281].

Ferner wurden in der Praxis Kettenverlängerungsmittel verwendet, die in ortho-Stellung Alkylgruppen tragen, darunter bevorzugt die in ortho-Stellung alkylsubstituierten Diamino-diphenylmethane, wie 3,3',5,5'-Tetraisopropyl-4,4'-diamino-diphenylmethan oder das 3,5-Dimethyl-3',5'-diisopropyl-4,4'-diaminodiphenylmethan (DE-OS-3 126 436). Mit diesen Aminen werden die Topfzeiten aber so kurz, dass keine vernünftige Verarbeitung mehr möglich ist.

Aus der CH-Anmeldung 3281/84 sind ausserdem Ames-Test-negative ortho-halogenierte Diamino-diphenylmethane enthaltende Kondensate bekannt, die ebenfalls als Kettenverlängerungsmittel bzw. Vernetzungsmittel für Polyurethane und Epoxide eingesetzt werden.

Die Ansicht, dass sich nur mit Aminen als Kettenverlängerungs- oder Vernetzungsmitteln, die in ortho-Stellung elektronenziehende Reste wie z. B. Halogenreste aufweisen, die besten Resultate erzielen lassen, ist weitverbreitet [Hepburn, Polyurethan Elastomers, Appl. Sience Publ. (1982) S. 57; Becher, Braun, Kunststoff Handbuch, Bd. 7, Polyurethane, 2. völlig neu bearb. Aufl. (1983) S. 100].

Man war sogar bereit, schlechte toxikologische Daten sowie erhebliche Nachteile in der Temperaturstabilität der einzelnen o-halogenierten Verbindungen in Kauf zu nehmen. So sollte bei MOCA zum Beispiel die maximale Arbeitstemperatur, um unerwünschte Blasenbildung durch Gasentwicklung im Produkt infolge Zersetzungsreaktionen zu vermeiden, 140°C nicht überschreiten.

Aufgabe der vorliegenden Erfindung ist es daher, Kettenverlängerungs- resp. Vernetzungsmittel zu finden, die die oben genannten Nachteile nicht in sich vereinen. Überraschenderweise wurde gefunden, dass sich mit 4,4'-Methylen-bis-anilinen als Kettenverlängerungs- resp. Vernetzungsmittel, die o,o'-dialkylsubstituiert und in meta-Stellung halogensubstituiert sind, entgegen der weitverbreiteten Ansicht gleichwertige, vielfach sogar bessere Elastomereigenschaften bei ebenso vorteilhaften Verarbeitungszeiten erzielen lassen.

Ausserdem konnte festgestellt werden, dass die erfindungsgemässen Verbindungen extrem temperaturstabil sind. So konnten die meisten ohne Auftreten einer Exothermie bis 350°C erhitzt werden (Vergleich MOCA ca. 200°C). Die maximal mögliche Arbeitstemperatur mit den neuen Verbindungen liegt folglich wesentlich höher als mit den herkömmlichen Kettenverlängerungsmittel (Vergleich MOCA 140°C). Wird diese auch nicht ausgenützt, so ist zumindest der sichere, zersetzungsfreie Arbeitstemperaturbereich wesentlich grösser.

Diese Kettenverlängerungs- oder Vernetzungsmittel sind zudem Ames-Test-negativ und werden charakterisiert durch die allgemeine Formel

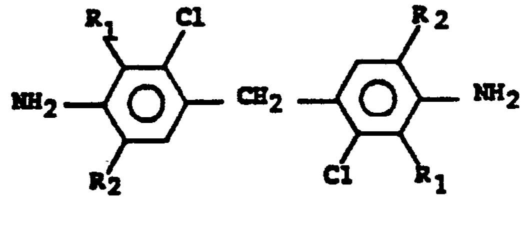

14

worin $R_1$ = Alkyl, gleich oder verschieden, geradkettig oder verzweigt, mit 1 bis 4 C-Atomen, und $R_2$ = Chlor oder Alkyl, gleich oder verschieden, geradkettig oder verzweigt mit 1 bis 4 C-Atomen, bedeutet. Sie stellen neue, bisher nicht literaturbekannte Verbindungen dar.

Bevorzugte Kettenverlängerungsmittel resp. Vernetzungsmittel aus dieser Reihe sind:

4,4'-Methylen-bis-(3-chlor-2,6-diethylanilin)
4,4'-Methylen-bis-(5-chlor-2-methyl-6-ethylanilin)

4,4'-Methylen-bis-(3-chlor-2-methyl-6-ethylanilin)
4,4'-Methylen-bis-(3-chlor-2-methyl-6-isopropylanilin)
4,4'-Methylen-bis-(3-chlor-2-methyl-6-sec.-butylanilin)
4,4'-Methylen-bis-(2,5-dichlor-6-ethylanilin)

Besonders bevorzugt wird 4,4'-Methylen-bis-(3-chlor-2,6-diethylanilin) angewendet.

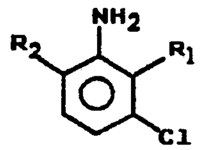

15

Die Herstellung erfolgt vorteilhaft ausgehend von 3-Chloranilinen der Formel

worin $R_1$ und $R_2$ die genannten Bedeutungen haben, durch deren Umsetzung mit Formaldehyd oder Formaldehyd liefernden Agenzien, in Gegenwart von starken anorganischen Säuren.

Als starke anorganische Säuren werden zweckmässig Schwefelsäure oder Salzsäure verwendet. Andere starke anorganische Säuren sind aber ebenso geeignet. Die Säuremenge kann in weiten Bereichen variiert werden, doch bedingen kleine Säuremengen längere Reaktionszeiten und umgekehrt.

Das Mengenverhältnis Formaldehyd, gegebenenfalls hergestellt aus Formaldehyd liefernden Mitteln, zu Anilin wird zweckmässig so gewählt, dass auf 1 Mol Anilin 0,4 bis 0,6 Mol, vorzugsweise 0,45 bis 0,5 Mol Formaldehyd fallen. Formaldehyd als solches wird vorteilhaft in Form seiner wässrigen Lösung als Formalin in Konzentrationen von 20 bis 40 % eingesetzt. Als Formaldehyd abspaltendes Reagenz kann z. B. Paraldehyd eingesetzt werden.

Üblicherweise führt man die Reaktion in Gegenwart von aprotischen oder protischen Lösungsmitteln aus. Als aprotische Lösungsmittel können z. B. Xylol oder Toluol verwendet werden; als protische Lösungsmittel sind die $C_1$-$C_4$-Alkohole vorzuziehen. Die Reaktion führt man zweckmässig bei erhöhter Temperatur vorteilhaft bei Rückflusstemperatur des Gemisches durch. Nach Reaktionszeiten von 4 bis 10 Stunden und nach üblicher Aufarbeitung und Reinigung können die Produkte in Reinheiten von z. T. grösser als 95 % und in Ausbeuten von grösser als 90 % erhalten werden.

Erfindungsgemäss werden die neuen Verbindungen als Kettenverlängerungsmittel resp. Vernetzungsmittel für Polyurethane eingesetzt. Sie können aber ohne weiteres auch Anwendung als Härter für Epoxidharze, als wertvolle Zwischenprodukte z. B. für die Herstellung von neuen Herbiziden, als Kettenglieder für Polyimide und Triazinharze (z. B. sogenannte BT-Harze) und Polyamide finden.

Die Applikation der erfindungsgemässen Kondensate richtet sich in der Menge sowie in der Art der Zugabe nach den Eigenschaften der jeweiligen Ausgangsprodukte und nach der Art der herzustellenden Endprodukte.

Die Einarbeitung der erfindungsgemässen Ames-Test-negativen Kettenverlängerungsmittel oder Vernetzungsmittel in Polyurethanen kann nach einer für die Polyurethanherstellung üblichen Weise, z. B. mit dem Reaktionsspritzgussverfahren (RIM), dem Streich- oder dem Tauchverfahren, mit den üblichen Reaktionssystemen der Polyisocyanate, Polyhydroxyverbindungen, Katalysatoren und weiteren Zusätzen erfolgen. Geeignete Polyisocyanate dafür sind aromatische Polyisocyanate, wie z. B. Methylenphenylendiisocyanat (MDI), Toluylendiisocyanat (TDI), Naphthalindiisocyanat (NDI), Para-phenylendiisocyanat (PPDI), Trans-cyclohexan-1,4-diisocyanat (CHDI), Meta-tetramethyl-xylen-diisocyanat (m-TMXDI), Para-tetramethyl-xylen-diisocyanatdiisocyanat (p-TMXDI) oder aliphatische und cycloaliphatische Polyisocyanate, wie z. B. Isophorondiisocyanat bzw. Hexamethylendiisocyanat.

Als Polyhydroxyverbindungen können Polyglykole, wie z. B. Polypropylenglykol, Polytetramethylenglykol sowie Polyethylenglykole inkl. deren Copolymere, Polyesterpolyole, wie Kondensate aus überschüssigen Diolen und Dicarbonsäuren mit Molekulargewichten bis 5000 oder Polycaprolactone und Telekene zur Anwendung kommen.

Ausserdem sind alle üblichen Katalysatoren, wie Tetramethylbutandiamin (TMBDA), Diazabicyclooctan (DABCO), Dibutylzinndilaurat (DBTC), oder auch organische Schwermetallverbindungen, wie Quecksilberverbindungen und Eisenacetylacetonat, einzeln oder in Kombination untereinander und mit Zusätzen wie Weichmacher, Treibmittel, Flammschutzmittel oder auch Füllstoffen anwendbar.

Die Reaktionssysteme können nach einem für Polyurethane üblichen Verfahren verarbeitet werden. So kann nach dem one-shot-Verfahren oder auch nach dem Prepolymer-Verfahren gearbeitet werden.

Gegebenenfalls kann auch so vorgegangen werden, dass in einem ersten Schritt das Vernetzungsmittel, resp. das Kettenverlängerungsmittel im Polyol gelöst wird und erst in einem zweiten Schritt mit dem Isocyanat verarbeitet wird.

Wird nach dem one-shot-Verfahren gearbeitet, setzt man zweckmässig pro Äquivalent Isocyanat 0,8 bis 1,1 Äquivalente, bevorzugt 0,9 bis 1,0 Äquivalente, besonders bevorzugt 0,95 bis 0,98 Äquivalente der Summe an -OH- und $NH_2$-Äquivalenten aus Polyol und Amin zu.

Beim two-shot-Verfahren wird das Kettenverlängerungsmittel, bzw. das Vernetzungsmittel zweckmässig in Mengen von 0,8 bis 1,1 Äquivalenten, vorzugsweise 0,9 bis 1,0 Äquivalenten, besonders bevorzugt 0,95 bis 0,98 Äquivalenten pro Äquivalent Isocyanat zugesetzt.

Durch die Variation der einzelnen Parameter Kettenverlängerungsmittel oder Vernetzungsmittel, Polyole und Isocyanate können die Eigenschaften des Elastomers massgeblich verändert werden.

Folgende Tabellen zeigen die erheblichen Verbesserungen in den physikalischen Daten eines Standard-Elastomers durch die erfindungsgemässen o,o'-dialkylierten und meta-halogenierten 4,4'-Methylen-bis-aniline im Vergleich zu den o-substituierten Verbindungen aus dem Stand der Technik:

**Prüfung von diversen 4,4'-Methylen-bis-anilin-Derivaten als Kettenverlängerungsmittel für diverse Polyurethanelastomere**

1) Zusammenfassung der Diamine

| 4,4'-Methylen-bis-... | Amin Nr. | Herstellungs-beispiel | Ames-Test | Bemerkungen |
|---|---|---|---|---|
| -(2-chloranilin) s.g. MOCA | I | Handels-produkt | + | *Vergleichssubstanz* |
| -(3-chloranilin) | II | 12 | + | *Vergleichssubstanz* ("nicht alkyliert") |
| -(3-chlor-2-methyl-anilin) | III | -- | + | *Vergleichssubstanz* ("mono-alkyliert") |
| -(2,5-dichlor-6-ethylanilin | IV | 10 | - | Substanz gemäss Erfindung |
| -(3-chlor-2,6-diethylanilin | V | 1 | - | Substanz gemäss Erfindung |
| -(3-chlor-2-methyl-6-ethylanilin | VI | 3 | - | Substanz gemäss Erfindung |
| -(5-chlor-2-methyl-6-isopropylanilin | VII | 5 | - | Substanz gemäss Erfindung |
| -(3-chlor-2-methyl-6-isopropylanilin) | VIII | 6 | - | Substanz gemäss Erfindung |
| -(3-chlor-2,6-di-sec.-butylanilin) | IX | 7 | - | Substanz gemäss Erfindung |
| -(5-chlor-2-methyl-2-sec.-butylanilin | X | 8 | - | Substanz gemäss Erfindung |
| -(5-chlor-2-methyl-anilin) | XI | 11 | + | Vergleichssubstanz |
| *Keine M-bis-Verb.* 3,5-Diamino-4-chlorbenzoesäure sec.-butylester | XII | Handels-produkt | ? | Vergleichssubstanz |

2) Bereitung der "Komponente A", d.h. der Prepolymeren mit Isocyanatendgruppen

a) Auf Basis Polycaprolacton und 2,4-Toluylendiisocyanat (TDI)

1 000 g (0,5 Mol) Polycaprolacton mit einem Molgewicht von 2 000 werden auf 100°C erhitzt und bei einem Vakuum von 2 500 Pa eine Stunde entwässert. Anschliessend kühlt man auf 80°C ab, entspannt mit $N_2$ und versetzt mit 230 g 2,4-TDI (1,32 Mol) unter intensivem Rühren. Nach dem Abklingen der exothermen Reaktion wird noch weitere 2 Stunden bei 80°C unter $N_2$ gerührt. Man erhält ein Prepolymer mit einem Gehalt von 5,6 % an freien NCO-Gruppen. Wir bezeichnen dieses Prepolymer als *"PCL-2 000-TDI"*, vgl. Tab. 1.

b) Prepolymer auf Basis Polytetramethylenglykol (PTMG) und 2,4-Toluylendiisocyanat (TDI)

1 000 g (1 Mol) PTMG mit Molgewicht 1 000 werden auf 100°C erhitzt und bei einem Vakuum von 2 500 Pa eine Stunde entwässert. Anschliessend kühlt man auf 80°C ab, entspannt mit $N_2$ und versetzt bei dieser Temperatur unter gutem Rühren mit 348 g (2 Mol) 2,4-Toluylendiisocyanat. Nach dem Abklingen der exothermen Reaktion wird noch weitere 2 Stunden bei 80°C unter $N_2$ gerührt. Man erhält so ein Prepolymer mit einem Gehalt von 6,2 % an freien NCO-Gruppen. Wir bezeichnen dieses Prepolymer als *"PTMG-1 000-TDI"*.

c) Prepolymer auf Basis Polycaprolacton und Methylen-bis-phenylisocyanat (MDI)

1 000 g (0,5 Mol) Polycaprolacton mit einem Molgewicht von 2 000 werden auf 100°C erhitzt und bei einem Vakuum

von 2 500 Pa eine Stunde lang entwässert. Anschliessend kühlt man auf 80°C ab, entspannt mit $N_2$ und versetzt unter gutem Rühren mit 400 g (1,6 Mol) MDI (Fp. 40°C). Nach dem Abklingen der exothermen Reaktion wird weitere 2 Stunden bei 80°C unter $N_2$ gerührt. Man erhält so ein Prepolymer mit einem Gehalt von 6,6 % an freien NCO-Gruppen. Wir bezeichnen dieses Prepolymer als *"PCL-2 000-MDI"*.

3) "Komponente B"
Die Kompenente B ist entweder das geschmolzene Diamin I - XIII, oder die klare, entgaste, auf Verarbeitungstemperatur (60°C) abgekühlte Lösung des Amins im entsprechenden Polyol. Die Lösungen in Prepolymeren enthalten zudem bezogen auf das Gesamtsystem (Komponenten A+B) 0,1 % Quecksilberpropionat als Katalysator. Im Regelfall wurde die Komponente B wie folgt bereitet: in das entgaste, auf 80°C vorgewärmte Polyol-Katalysatorgemisch wurde das Amin als Schmelze zugetropft bzw. das Amin darin aufgelöst und innig vermischt und auf 60°C abgekühlt.

4) Härtung bzw. Bereitung der Prüfkörper
Die Komponenten A und B wurden im molaren stöchiometrischen Verhältnis, d.h. NCO-Gruppen zur Summe von freien -OH- und -$NH_2$-Gruppen wie 1 : 1 bei 60°C während 10 - 15 sec., bzw. bis kurz vor maximal der Erreichung der Topfzeit ("pot life") innig vermischt und schliesslich in eine auf 100°C vorgewärmte Metallform (A1) mit den Innenmassen in mm von 120 x 100 x 3 gegossen. In Abständen von jeweils 2 - 5 Minuten wurde durch Eindringen eines Fingernagels der Härtungszustand geprüft. Sobald kein Eindringen mehr feststellbar war ("Nagelzeit"), wurde entformt ("demoulding time"). Aus den gehärteten Elastomeren wurden die Prüfkörper herausgeschnitten.

5) Physikalische Prüfung der Elastomeren bzw. verwendete Begriffe bzw. Abkürzungen in den Tabellen

| | |
|---|---|
| "Härte" (H): | Shore-Härten A und D gemäss DIN 53 505 bzw. entsprechend shore hardness, Durometer hardness, entsprechend ASTM-D: 2240 bzw. 1706 Anm: Shore "A" und "D" unterscheiden sich grundsätzlich und sind nicht vergleichbar. |
| "Strukturfestigkeit" (SF): | Bestimmung gemäss DIN 53 515, d.s. "Zugfestigkeit" in N/mm, erste Zahl bei 60°C, zweite Zahl bei 20°C. Beurteilung Niveau hochtemperaturbeständig, besonders wenn Differenz zudem klein: "strukturfest". |
| "Rückprall" (RP): | (= Rückprallelastizität") nach DIN 53 512 in % entspricht in etwa "falling ball rebound" gemäss ASTM-D 1054. |
| "n.g.": | "nicht gerissen" |
| "Zugfestigkeit" ("ZF"): | (engl. "tensile strength") in N/mm nach DIN 53 455 |
| "M.A.": | Molanteil der Amine in der Komponente B (Rest zu 1,0 Polyole) |
| "G.A.": | Gewichtanteil der Komponente B in Gewichtsteilen (Amin + Polyol) in Bezug auf 100 Teile Komponente A (Prepolymer) |
| "T.Z.": | "Topfzeit" ("pot life", Definition siehe Punkt 4). |
| "N.Z.": | "Nagelzeit" ("demoulding time", Definition siehe Punkt 4). |

**6) Tabelle Nr. 1: Ergebnisse mit dem Prepolymer "PCL-2000 TDI"**

| Amin A Nr. | "A" in Komp. B in Mol % | "G.A." Komp. B gegen 100 Komp. A | T.Z. "Topfzeit" | N.Z. "Nagelzeit" | H Shore A oder D | S.F. (N/mm) 60°C | S.F. (N/mm) 20°C | R.P. % | Z.F. N/mm² | Bemerkung |
|---|---|---|---|---|---|---|---|---|---|---|
| II | 100 | 18,7 | 33" | 5' | 85A | 8 | 33 | 24 | 19,3 | Vergl. |
| II | 66 | 56 | 30" | 30' | 63A | 5 | 35 | 40 | 21,1 | Vergl. |
| XI | 100 | 21 | 30" | 29' | 42D | 37 | 68 | 29 | 20,5 | Vergl. |
| XI | 66 | 60 | 30" | 35' | 82A | 29 | 57 | 41 | 30,6 | Vergl. |
| IV | 66 | 61 | 1'10" | 25' | 89A | 55 | 75 | 47 | 35,5 "n.g." | Erf. |
| V | 66 | 58 | 1'30" | 53' | 86A | 38 | 58 | 47 | 37,1 | Erf. |
| VI | 66 | 56 | 1'10" | 40' | 87A | 53 | 62 | 48 | 36,1 | Erf. |
| VIII | 66 | 57,5 | 1'05" | 25' | 87A | 31 | 61 | 44 | 32,8 | Erf. |

**7) Tabelle Nr. 2: Ergebnisse mit dem Prepolymeren "PTMG-1000-TDI"**

| | | | | | | | | | | |
|---|---|---|---|---|---|---|---|---|---|---|
| I | 100 | 18,7 | 5' | 44' | 47D | 39 | 72 | 35 | 34,0 | Vergl. |
| XII | 100 | 17 | 34'(!) | 120(!) | 48D | 52 | 93 | 36 | 32,3 | Vergl. |
| V | 100 | 19,5 | 2'30" | 23' | 55D | 79 | 84 | 37 | 30,0 "n.g." | Erf. |
| V | 80 | 35 | 3' | 28' | 43D | 51 | 87 | 39 | 35,9 | Erf. |
| X | 100 | 27 | 2'30" | 16' | 44D | 32 | 52 | 35 | 24,4 "n.g." | Erf. |
| IX | 100 | 33 | 3'10" | 18' | 48D | 32 | 67 | 40 | 28,5 | Erf. |

**8) Tabelle Nr. 3: Ergebnisse mit dem Prepolymeren "PCL-2000 MDI"**

| | | | | | | | | | | |
|---|---|---|---|---|---|---|---|---|---|---|
| V | 100 | 30 | 20" | 5' | 55D | 61 | 74 | 42 | 25,6 | Erf. |
| V | 66 | 72 | 19" | 9' | 88A | 37 | 64 | 45 | 35,1 | Erf. |
| III | 66 | 70 | 18" | 9' | 84A | 16 | 31 | 42 | 14,3 | Vergl. |
| VII | 66 | 67 | 22" | 7' | 87A | 22 | 38 | 45 | 24,1 | Härtung bei 70°C Erf. |

**Beispiel 1**

4,4'-Methylen-bis-(3-chlor-2,6-diethylanilin)

455,0 g = 2,48 Mol 3-Chlor-2,6-diethylanilin und 460,0 g Xylol (technische Isomerenmischung) wurden im Reaktionskolben vorgelegt und darauf 58,0 g 53 %-ige $H_2SO_4$ unter Rühren zugetropft. Anschliessend wurde auf ca. 94°C aufgeheizt und unter lebhaftem Rühren 113,0 g = 1,19 Mol 31,8 %-iges Formalin über 10 Minuten gleichmässig zudosiert (96,6 Äq.-%, bezogen auf das Anilin).

Darauf wurde während 7 Stunden bei Rückflusstemperatur gerührt, dann 60,0 g 50 %-ige Natronlauge zudosiert und während 30 Minuten weitergerührt. Dann wurde das Rühren unterbrochen und nach der Schichtentrennung die wässrige Phase abgelassen. Ausgewaschen wurde zweimal mit je 150 ml Wasser bei ungefähr 90°C. Vom gewaschenen Reaktionsprodukt wurde vorerst unter Normaldruck das Lösungsmittel abgeflasht. Darauf wurden Temperatur und Vakuum kontinuierlich erhöht, um auch die letzten Reste der leichtsiedenden Komponente (hauptsächlich Edukt) zu entfernen. Um im Rückstand den Eduktgehalt unter 0,1 % zu bringen, waren Endbedingungen von 225°C/2,66 mbar nötig. Der Rückstand entsprach dem gewünschten Produkt. Das Lösungsmittel und das geflashte Edukt konnten wieder verwendet werden. Ergebnis: 435,0 g Endprodukt = 95,7 %, Gehalt nach GC 96 %; das Produkt kristallisierte leicht; Schmelzpunkt zwischen 80 und 90°C.

NMR: ($CDCl_3$) δ
1,1 - 1,2 (t,t, 12 H, 4-$\underline{CH_3}$-$CH_2$);
2,4 (q, 4H, $\underline{2\text{-}CH_2}$-$CH_3$);
2,8 (q, 4H, $\underline{2\text{-}CH_2}$-$CH_3$);
3,6 (s, 4H, 2-$NH_2$);
4,02 (s, 2H, Arom-$\underline{CH_2}$-Arom);
6,6 (s, 2H, 2 Arom-$\underline{H}$);

IR: (dünner Film) $cm^{-1}$ 3500 - 3300 (m), 2967, 2934, 2873 (vs), 1620, 1450 (vs), 1297 (m), 1056 (m), 886 (m), 757 (m).

Keine Exothermie des Produktes bei 350°C über 8 Stunden feststellbar.

**Beispiel 2**

4,4'-Methylen-bis-(5-chlor-2-methyl-6-ethylanilin)

130,0 g = 0,77 Mol 5-Chlor-2-methyl-6-ethylanilin und 150,0 g Xylol (technische Isomerenmischung) wurden im Reaktionskolben vorgelegt und darauf 16,6 g 63 %-ige $H_2SO_4$ unter Rühren zugetropft. Anschliessend wurde auf ca. 94°C aufgeheizt und unter lebhaftem Rühren 34,6 g = 0,36 Mol 31,5 %-iges Formalin über 10 Minuten gleichmässig zudosiert (95,0 Äq.-%, bezogen auf das Anilin). Die Reaktionstemperatur stellte sich bald auf die Siedetemperatur des Azeotrops Xylol/Wasser von 94°C ein. Die Reaktionsbedingungen (Rückfluss/lebhaftes Rühren) wurden während 7 Stunden aufrechterhalten, dann 17,0 g 50 %-ige Natronlauge zugesetzt und während weiteren 30 Minuten gerührt. Phasentrennung, Waschen (zweimal mit 150 ml Wasser) und destillative Aufarbeitung erfolgten analog Beispiel 1. Das Lösungsmittel und das geflashte Edukt konnten wieder verwendet werden.

Ergebnis: 125,0 g Endprodukt = 98,8 %, Gehalt nach GC 96 %; das Produkt war kristallin; Schmelzpunkt zwischen 143 und 148°C.

NMR: ($CDCl_3$) δ
1,2 (t, 6H, 2 $\underline{CH_3}$-$CH_2$);
2,1 (s, 6H, 2 $\underline{CH_3}$-Arom);
2,8 (q, 4H, 2-$\underline{CH_2}$-$CH_3$);
3,6 (s, 4H, 2-$\underline{NH_2}$);
4,0 (s, 2H, Arom-$\underline{CH_2}$-Arom);
6,6 (s, 2H, 2-Arom-$\underline{H}$);

IR: (dünner Film) $cm^{-1}$ 3500 - 3300 (m), 2969, 2932, 2873 (s), 1620 (vs), 1470, 1442 (vs), 1301 (m), 987 (s), 756 (s).

Keine Exothermie des Produktes bei 350°C über 8 Stunden feststellbar.

**Beispiel 3**

4,4'-Methylen-bis-(3-chlor-2-methyl-6-ethylanilin)

130,0 g = 0,77 Mol 3-Chlor-2-methyl-6-ethylanilin und 150,0 g Xylol (technische Isomerenmischung) wurden im Reaktionskolben vorgelegt und darauf 16,6 g 53 %-ige $H_2SO_4$ unter Rühren zugetropft. Nach Aufheizen auf 94°C wurden unter lebhaftem Rühren 32,9 g = 0,34 Mol 31,6 %-iges Formalin über 10 Minuten gleichmässig zudosiert (90,4 Äq.-%, bezogen auf das Anilin). Die Reaktionstemperatur stellte sich bald auf die Siedetemperatur des Azeotrops Xylol/Wasser von ca. 94°C ein. Die Reaktionsbedingungen (Rückfluss/lebhaftes Rühren) wurden über 7 Stunden beibehalten, dann 17,0 g 50 %-ige Natronlauge zugesetzt und während weiteren 30 Minuten gerührt. Darauf erfolgte Phasentrennung, Waschen (zweimal mit je 150 ml Wasser) und destillative Aufarbeitung analog Beispiel 1. Das Lösungsmittel und das geflashte Edukt konnten wieder eingesetzt werden.

Ergebnis: 117,0 g Endprodukt = 96,1 %, Gehalt nach GC 96 %; das Produkt war kristallin; Schmelzpunkt zwischen 115 und 117°C.

NMR: ($CDCl_3$) δ
1,18 (t, 6H, 2 $\underline{CH_3}$-$CH_2$);
2,3 (s, 6H, 2 $\underline{CH_3}$-Arom);
2,42 (q, 4H, 2-$\underline{CH_2}$-$CH_3$);
3,62 (s, 4H, 2-$\underline{NH_2}$);
4,02 (s, 2H, Arom-$\underline{CH_2}$-Arom);
6,62 (s, 2H, 2-Arom-$\underline{H}$);

IR: (dünner Film) $cm^{-1}$ 3500 - 3300 (m), 2965, 2934, 2874 (s), 1622 (vs), 1469 (vs), 1438 (vs), 1012 (s).

Keine Exothermie des Produktes bei 350°C über 8 Stunden feststellbar.

**Beispiel 4**

4,4'-Methylen-bis-(3-chlor-2,6-diisopropylanilin)

130,0 g = 0,61 Mol 3-Chlor-2,6-diisopropylanilin und 120,0 g Butan-1-ol wurden im Reaktionskolben vorgelegt und auf 65°C erwärmt. Bei dieser Temperatur wurden 66,0 g 53 %-ige $H_2SO_4$ unter Rühren zugetropft. Nach Temperaturerhöhung auf 93°C wurden unter lebhaftem Rühren 29,2 g = 0,3 Mol 31,6 %-iges Formalin über 10 Minuten gleichmässig zudosiert (100,1 Äq.-%, bezogen auf das Anilin). Die Reaktionstemperatur stellte sich bald auf die Siedetemperatur des Azeotrops Butan-1-ol/Wasser von 93°C ein.

Die Reaktionsbedingungen (Rückfluss/lebhaftes Rühren) wurden über 5 Stunden beibehalten, dann 80,0 g 50 %-ige Natronlauge zugesetzt und weitere 30 Minuten gerührt. Phasentrennung, Waschen (zweimal mit 150 ml Wasser) und destillative Aufarbeitung erfolgten mit dem Lösungsmittel Butan-1-ol prinzipiell nach Beispiel 1. Das Lösungsmittel und das geflashte Edukt konnten wieder verwendet werden. Ergebnis: 125,0 g Endprodukt = 95,6 %, Gehalt nach GC 91 %; das Produkt war eine braune, erstarrte Schmelze mit einem Erweichungsinterval um 50 bis 60°C.

NMR: ($CDCl_3$) δ
1,15 (d, 12H, 2 ($\underline{CH_3}$)$_2$-CH-);
1,23 (d, 12H, 2 ($\underline{CH_3}$)$_2$-CH);
2,82 (m, 2H, 2-$\underline{CH}$-($CH_3$)$_2$);
3,8 (s, 4H, 2-$\underline{NH_2}$);
4,0 (s, 2H, Arom-$\underline{CH_2}$-Arom);
3,9 - 4,1 (breit, 2H, 2-$\underline{CH}$-($CH_3$)$_2$);
6,6 (s, 2H, 2 Arom-$\underline{H}$);

IR: (dünne Schicht) $cm^{-1}$ 3500 - 3300 (m), 2961, 2932, 2873 (vs), 1620, 1463, 1442 (vs), 1342, 1081, 759 (m).

Exothermie nach 3 Stunden bei 350°C feststellbar.

**Beispiel 5**

4,4'-Methylen-bis-(5-chlor-2-methyl-6-isopropylanilin)

130,0 g = 0,77 Mol 5-Chlor-2-methyl-6-isopropylanilin und 120 g Butan-1-ol wurden im Reaktionskolben vorgelegt und auf 80°C erwärmt und unter Rühren 66 g 53 %-ige Schwefelsäure zugetropft. Nach Temperaturerhöhung auf 93°C wurden unter lebhaftem Rühren 35,3 g = 0,37 Mol 31,6 %-iges Formalin über 10 Minuten gleichmässig zudosiert (105 Äq.-%, bezogen auf das Anilin). Die Reaktionstemperatur stellte sich bald auf die Siedetemperatur des Azeotrops Butan-1-ol/Wasser von 93°C ein. Die Reaktionsbedingungen (Rückfluss/lebhaftes Rühren) wurden über 5 Stunden aufrechterhalten, dann 80,0 g 50 %-ige Natronlauge zugesetzt und weitere 30 Minuten gerührt.

Phasentrennung, Waschen und destillative Aufarbeitung erfolgten wie in Beispiel 4. Das Lösungsmittel und das geflashte Edukt konnten wieder verwendet werden. Ergebnis: 130,0 g Endprodukt = 92,1 %, Gehalt nach GC 89 %; das Produkt war eine braune, erstarrte Schmelze mit einem Erstarrungsinterval um 75 bis 95°C.

NMR: ($CDCl_3$) δ
1,4 (d, 12H, 2 $(\underline{CH_3})_2$-CH);
2,08 (s, 6H, 2 $\underline{CH_3}$-Arom);
3,7 (s, 4H, 2-$\underline{NH_2}$);
4,0 (s, 2H, Arom-$\underline{CH_2}$-Arom);
3,9 - 4,1 (breit, 2H, -$\underline{CH}$-$(CH_3)_2$);
6,58 (s, 2H, 2 Arom-$\underline{H}$);

IR: (dünne Schicht) $cm^{-1}$ 3500, 3410 (m), 2964, 2931, 2872 (vs) 1619, 1470, 1439 (vs), 1349, 1321, 1214 (m), 1000, 983 (m), 759 (s).

Keine Exothermie bis 320°C festzustellen.

**Beispiel 6**

4,4'-Methylen-bis-(3-chlor-2-methyl-6-isopropylanilin)

130,0 g = 0,71 Mol 3-Chlor-2-methyl-6-isopropylanilin und 120 g Butan-1-ol wurden im Reaktionskolben auf 80°C erwärmt und unter Rühren 66,0 g 53 %-ige $H_2SO_4$ zugetropft. Anschliessend wurden bei 93°C 33,0 g = 0,35 Mol 31,6 %-iges Formalin über 10 Minuten gleichmässig zudosiert (98 Äq.-%, bezogen auf das Anilin). Die Reaktionstemperatur stellte sich bald auf die Siedetemperatur des Azeotrops Butan-1-ol/Wasser von 93°C ein. Die Reaktionsbedingungen (Rückfluss/lebhaftes Rühren) wurden während 5 Stunden aufrechterhalten, dann 80,0 g 50 %-ige Natronlauge zugesetzt und weitere 30 Minuten gerührt.

Phasentrennung, Waschen und destillative Aufarbeitung erfolgten wie in Beispiel 4. Das Lösungsmittel und das geflashte Edukt konnten wieder verwendet werden. Ergebnis: 129,0 g Endprodukt = 97,8 %, Gehalt nach GC 95 %; das Produkt war kristallin und hatte einen Schmelzpunkt von 118 bis 120°C.

NMR: ($CDCl_3$) δ
1,15 (d, 12H, 2 $(\underline{CH_3})_2$-CH);
2,3 (s, 6H, 2 $\underline{CH_3}$-Arom);
2,8 (m, 2H, 2-$\underline{CH}$-$(CH_3)_2$);
3,65 (s, 4H, 2-$\underline{NH_2}$);
4,02 (s, 2H, Arom-$\underline{CH_2}$-Arom);
6,75 (s, 2H, 2 Arom-$\underline{H}$);

IR: (dünne Schicht) $cm^{-1}$ 3500 - 3300 (m), 2961, 2929, 2871 (vs), 1621, 1468, 1434 (vs), 1198, 1081, 1017, 971, 752 (m).

Keine Exothermie des Produktes bei 350°C während 8 Stunden feststellbar.

**Beispiel 7**

4,4'-Methylen-bis-(3-chlor-2,6-di-sec.-butylanilin)

130,0 g = 0,54 Mol 3-Chlor-2,6-di-sec.-butylanilin und 120,0 g Butan-1-ol wurden im Reaktionskolben auf über 80°C erwärmt und unter Rühren 66,0 g 53 %-ige $H_2SO_4$ zugetropft. Nach Temperaturerhöhung auf 93°C wurden bei lebhaftem Rühren 25,8 g = 0,27 Mol 31,6 %-iges Formalin über 10 Minuten gleichmässig zudosiert (100,1 Äq.-%, bezogen auf das Anilin). Die Reaktionstemperatur stellte sich bald auf die Siedetemperatur des Azeotrops Butan-1-ol/Wasser von 93°C ein.

Die Reaktionsbedingungen (Rückfluss/lebhaftes Rühren) wurden während 5 Stunden aufrechterhalten, anschliessend 80,0 g 50 %-ige Natronlauge zugesetzt und weitere 30 Minuten gerührt. Phasentrennung, Waschen und destillative Aufarbeitung erfolgten analog Beispiel 4. Das Lösungsmittel und das geflashte Edukt konnten wieder verwendet werden. Ergebnis: 123,0 g Endprodukt = 92,5 %, Gehalt nach GC 93 %; das Produkt war bei Raumtemperatur eine braune, hochviskose Masse.

NMR: ($CDCl_3$) δ
0,8 (m, 6H, 2 $\underline{CH_3}$-$CH_2$-);
0,9 (m, 6H, 2 $\underline{CH_3}$-$CH_2$-);
1,1 (d, 6H, 2 $\underline{CH_3}$-CH-);
1,4 (d, 6H, 2 $\underline{CH_3}$-CH);
1,4 - 1,6 (m, 4H);
1,9 - 2,0 (m, 4H);
2,55 (m, 2H);
3,7 (s, 4H, 2-$\underline{NH_2}$);
3,8 - 4,1 (m, 4H, Arom-$\underline{CH_2}$-Arom);
6,5 (s, 2H, 2 Arom-$\underline{H}$);

IR: (dünne Schicht) $cm^{-1}$ 3500 - 3300 (m), 2962, 2931, 2873 (vs), 1619, 1443 (s).

Keine Exothermie des Produktes bei 350°C während 8 Stunden festzustellen.

**Beispiel 8**

4,4'-Methylen-bis-(5-chlor-2-methyl-6-sec.-butylanilin)

149,0 g = 0,75 Mol 5-Chlor-2-methyl-6-sec.-butylanilin und 137,0 g Butan-1-ol wurden im Reaktionskolben auf über 80°C erwärmt und unter Rühren 76,0 g 53 %-ige $H_2SO_4$ zugetropft. Nach Aufheizen auf 93°C wurden bei lebhaftem Rühren 35,0 g = 0,36 Mol 31,6 %-iges Formalin über 10 Minuten gleichmässig zudosiert (97,7 Äq.-%, bezogen auf das Anilin). Die Reaktionstemperatur stellte sich bald auf die Siedetemperatur des Azeotrops Butan-1-ol/Wasser von 93°C ein. Die Reaktionsbedingungen (Rückfluss/lebhaftes Rühren) wurden während 5 Stunden aufrechterhalten, anschliessend 91,0 g 50 %-ige Natronlauge zugesetzt und weitere 30 Minuten gerührt. Vor der Phasentrennung mussten noch 100 ml Wasser zugesetzt werden, damit sich das $Na_2SO_4$ vollständig löste. Darauf erfolgten Phasentrennung, Waschen und destillative Aufarbeitung entsprechend Beispiel 4. Das Lösungsmittel und das geflashte Edukt konnten wieder verwendet werden. Ergebnis: 134,0 g Edukt = 90 %, Gehalt nach GC 91 %; das Produkt war eine braune, erstarrte Schmelze mit dem Erweichungsinterval von 55 bis 65°C.

NMR: ($CDCl_3$) δ
0,9 (t, 6H, 2 $\underline{CH_3}$-$CH_2$);
1,4 (d, 6H, 2 $\underline{CH_3}$-CH);
1,7 - 1,9 (m, 4H, 2-$\underline{CH_2}$-$CH_3$);
2,05 (s, 6H, 2-$\underline{CH_3}$-Arom);
3,65 (s, 4H, 2-$\underline{NH_2}$);
3,8 (m, 2H, 2-$\underline{CH}$-($CH_3$)-$CH_2$-$CH_3$);
4,0 (s, 2H, Arom-$\underline{CH_2}$-Arom);
6,55 (s, 2H, 2 Arom-$\underline{H}$);

IR: (dünne Schicht) $cm^{-1}$ 3500 - 3300 (s), 2961, 2930, 2871 (vs), 1619, 1469, 1439 (vs), 1000, 982 (s).

Keine Exothermie des Produktes bis 340°C feststellbar.

**Beispiel 9**

4,4'-Methylen-bis-(3-chlor-2-methyl-6-sec.-butylanilin)

130,0 g = 0,66 Mol 3-Chlor-2-methyl-6-sec.-butylanilin und 120,0 g Butan-1-ol wurden im Reaktionskolben auf über 80°C erwärmt und unter Rühren 66,0 g 53 %-ige $H_2SO_4$ zugetropft. Darauf wurden bei 93°C 31,2 g = 0,33 Mol 31,6 %-iges Formalin über 10 Minuten gleichmässig zudosiert (99,9 Aeq.-%, bezogen auf das Anilin). Die Reaktionstemperatur stellte sich bald auf die Siedetemperatur des Azeotrops Butan-1-ol/Wasser von 93°C ein. Die Reaktionsbedingungen (Rückfluss/lebhaftes Rühren) wurden während 5 Stunden aufrechterhalten, dann 80,0 g 50 %-ige Natronlauge zugesetzt und weitere 30 Minuten gerührt. Phasentrennung, Waschen und destillative Aufarbeitung erfolgten entsprechend Beispiel 4. Das Lösungsmittel und das geflashte Edukt konnten wieder verwendet werden. Ergebnis: 124,0 g Endprodukt =

92,6 %, Gehalt nach GC 94 %; das Produkt war eine braune, erstarrte Schmelze mit kristallinen Anteilen; Schmelzpunkt 94 bis 102°C.

NMR: ($CDCl_3$) δ
0,8 (t, 6H, 2 $\underline{CH_3}$-$CH_2$);
1,2 (d, 6H, 2 $\underline{CH_3}$-CH-);
1,5 (m, 4H, 2-$\underline{CH_2}$-$CH_3$);
2,3 (s, 6H, 2 $\underline{CH_3}$-Arom);
2,55 (m, 2H, 2-$\underline{CH}$-($CH_3$)-$CH_2$-$CH_3$);
3,6 (s, 4H, 2-$\underline{NH_2}$);
4,05 (m, 2H, Arom-$\underline{CH_2}$-Arom);
6,6 (s, 2H, 2 Arom-$\underline{H}$);

IR: (dünne Schicht) $cm^{-1}$ 3500 - 3300 (s), 2967, 2931, 2872 (vs), 1622, 1469, 1435 (vs), 1378, 1320, 1195, 1017, 1000 (m), 752 (m).

Exothermie nach 2 Stunden bei 350°C feststellbar.

**Beispiel 10**

4,4'-Methylen-bis-(2,5-dichlor-6-ethylanilin)

130,0 g 2,5-Dichlor-6-ethylanilin in 120 g Butanol-1 wurden auf ungefähr 40°C erwärmt und unter Rühren mit 66 g 53 %-iger Schwefelsäure versetzt. Anschliessend wurden bei ungefähr 90°C 32,5 g 31,6 %-iges Formalin über 10 Minuten gleichmässig zudosiert (100 Äq.-%, bezogen auf das Anilin). Die Reaktionstemperatur stellte sich bald auf die Siedetemperatur des Azeotrops Butanol-l/Wasser von 93°C ein. Die Reaktionsbedingungen (Rückfluss/lebhafte Rührung) wurden während 5 Stunden beibehalten, dann 160 g 25 %-ige NaOH zugesetzt und weitere 30 Minuten gerührt. Darauf wurde auf 50°C abgekühlt und das feste Produkt abfiltriert und mit wenig Wasser nachgewaschen. Der Filterkuchen wurde dann in 500 ml Wasser aufgeschlämmt und während 10 Minuten bei 50°C gerührt. Nach der Filtration wurde diese Operation einmal wiederholt. Getrocknet wurde bei 100°C/26,6 mbar auf Gewichtskonstanz. Ergebnis: 113,9 g Endprodukt, Gehalt um 97 GC-Fl %. Das Produkt ist kristallin und hat einen Schmelzpunkt von 146 bis 148°C.

NMR ($CDCl_3$) δ
1,18 (t, 6H, 2 $\underline{CH_3}$-$CH_2$);
2.78 (g, 4H, 2 $\underline{CH_2}$-CH);
3,98 (s, 2H, Arom-$\underline{CH_2}$-Arom);
4,10 (s, 4H, 2-$\underline{NH_2}$);
6.78 (s, 2H, 2-Arom-$\underline{H}$);

IR (KBr): $cm^{-1}$ 3300 - 3500 (s), 2969, 2929, 2874 (s), 1616 (vs), 1448, 1429 (vs), 1401 (m), 1281 (m).

Exothermie bei 350°C feststellbar.

**Beispiel 11**

4,4'-Methylen-bis-(5-chlor-2-methylanilin)

130,0 g 5-Chlor-2-methylanilin in 170 g Butanol-1 wurden auf 50°C erwärmt und unter Rühren mit 66 g 53 %-iger Schwefelsäure versetzt. Anschlissend wurden bei ungefähr 90°C 42,7 g 30,2 %-iges Formalin über 10 Minuten gleichmässig zudosiert. (100 Äq.-%, bezogen auf das Anilin.) Die Reaktionstemperatur stellte sich bald auf die Siedetemperatur des Azeotrops Butanol-1/Wasser von 93°C ein. Die Reaktionsbedingungen (Rückfluss/lebhafte Rührung) wurden während 5 Stunden beibehalten, dann 180 g 22 %-ige NaOH angesetzt und weitere 30 Minuten gerührt. Phasentrennung, Waschen (2 mal mit 150 ml Wasser) und destillative Aufarbeitung erfolgten analog dem Beispiel 10. Das Lösungsmittel und das geflashte Edukt konnten rückgeführt werden. Ergebnis: 83 g Endprodukt, dessen Äquivalentgewicht um mehr als 11 % über dem theoretischen Wert lag. Die Substanz lag als erstarte Schmelze vor und hatte ein Schmelzbereich von 56 bis 60°C.

**Beispiel 12**

4,4'-Methylen-bis-(3-chloranilin)

130,0 g 3-Chloranilin in 120 g Butanol-1 wurden auf 50°C erwärmt und unter Rühren mit 66 g 53 %-iger Schwefelsäure versetzt. Anschlissend wurden bei ungefähr 90°C 45,5 g 31,6 %-iges Formalin über 10 Minuten gleichmässig zudosiert. (94 Äq.-%, bezogen auf das Anilin.) Die Reaktionstemperatur stellte sich bald auf die Siedetemperatur des Azeotrops

Butanol-1/Wasser von 93°C ein. Die Reaktionsbedingungen (Rückfluss/lebhafte Rührung) wurden während 5 Stunden beibehalten, dann 120 g 33 %-ige NaOH angesetzt und weitere 30 Minuten gerührt. Phasentrennung, Waschen (2 mal mit 150 ml Wasser) und destillative Aufarbeitung erfolgten analog dem Beispiel 10. Das Lösungsmittel und das geflashte Edukt konnten rückgeführt werden. Ergebnis: 85 g Endprodukt, dessen Äquivaltentgewicht um mehr als 10 % über dem theoretischen Wert lag. Die Substanz lag als erstarte Schmelze vor und hatte ein Schmelzbereich von 40 bis 60°C.

## Patentansprüche

1. 4,4'-Methylen-bis-(meta-chlor-2,6-dialkylaniline) der Formel

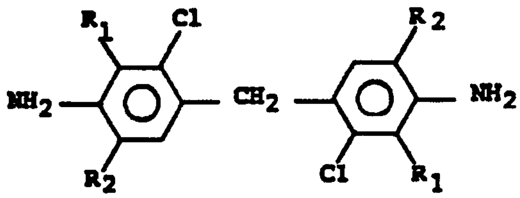

1

worin $R_1$ = Alkyl, gleich oder verschieden, geradkettig oder verzweigt, mit 1 bis 4 C-Atomen, und $R_2$ = Chlor oder Alkyl, gleich oder verschieden, geradkettig oder verzweigt, mit 1 bis 4 C-Atomen bedeutet.

2. 4,4'-Methylen-bis-(3-chlor-2,6-dialkylanilin)-verbindungen der folgenden Formeln

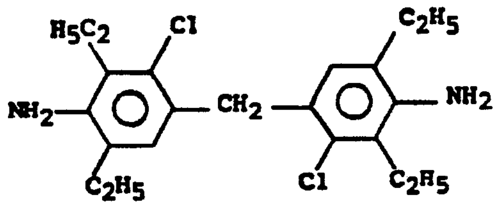

2

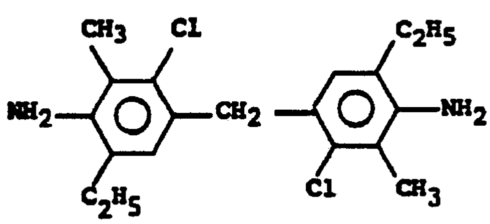

4

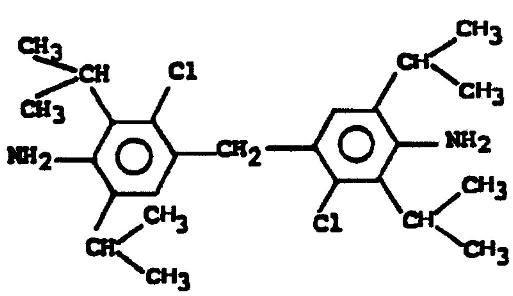

5

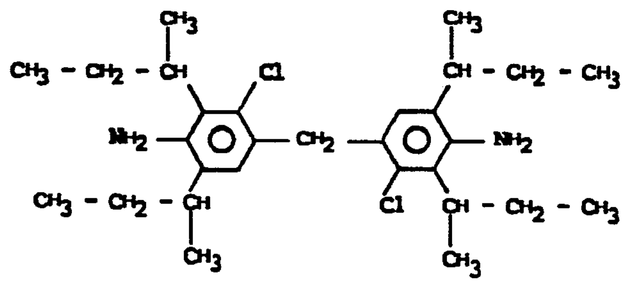

6

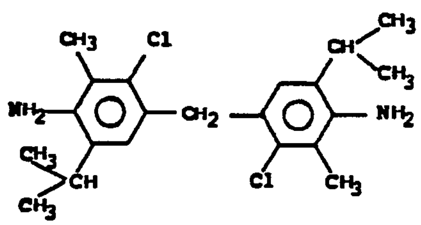

7

oder

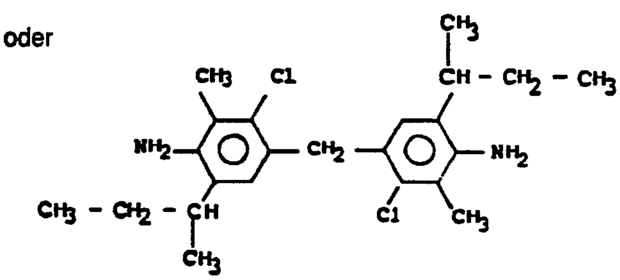

10

3. 4,4'-Methylen-bis-(5-chlor-2,6-dialkylanilin)-verbindungen der folgenden Formeln:

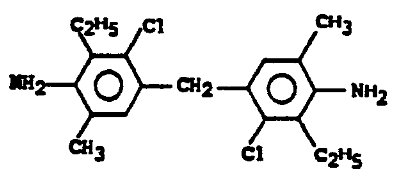

3

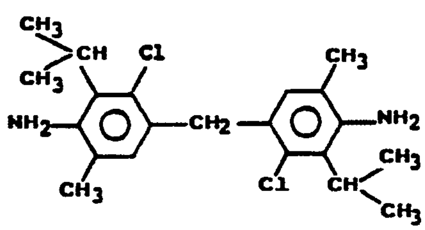

8

oder

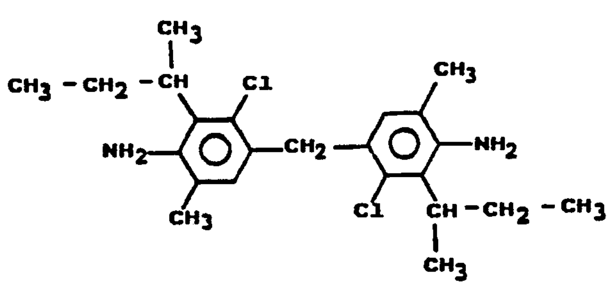

9

4. 4,4'-Methylen-bis-(2,5-dichlor-6-ethylanilin) der Formel

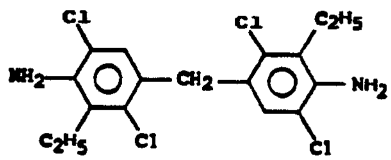

11

5. Verfahren zur Herstellung der Verbindungen gemäß Patentanspruch 1 - 4, dadurch gekennzeichnet, daß man 3-Chloraniline der Formel

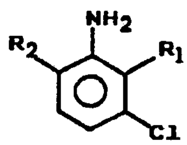

12

worin $R_1$ und $R_2$ die angegebenen Bedeutungen haben, in Gegenwart von starken anorganischen Säuren mit Formaldehyd oder Formaldehyd liefernden Agenzien umsetzt.

6. Verfahren nach Patentanspruch 5, dadurch gekennzeichnet, daß als starke Säuren Schwefelsäure oder Salzsäure angewendet wird.

7. Verfahren nach einem oder beiden der Patentansprüche 5 - 6, dadurch gekennzeichnet, daß 1 Mol 3-Chloranilin mit 0,4 bis 0,6 Mol Formaldehyd, gegebenenfalls aus Formaldehyd liefernden Agenzien, umgesetzt wird.

8. Verfahren nach einem oder mehreren der Patentansprüche 5 - 7, dadurch gekennzeichnet, daß man die Reaktion zusätzlich in einem Lösungsmittel durchführt.

9. Verwendung der Verbindungen gemäß einem oder mehreren der Patentansprüche 1 - 8 als Kettenverlängerungsmittel oder Vernetzungsmittel für Polyurethane.

10. Verwendung der Verbindungen der Formel

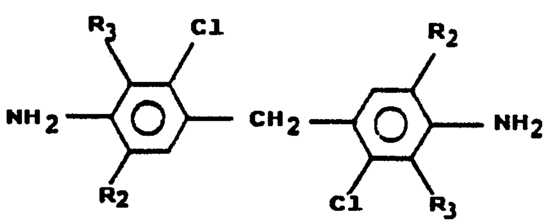

13

worin $R_2$ die in Anspruch 1 genannte Bedeutung hat und $R_3$ Alkyl mit 1 bis 2 C-Atomen bedeutet als Kettenverlängerungsmittel oder Vernetzungsmittel für Polyurethane.

## Claims

1. 4,4'-Methylene-bis-(m-chloro-2,6-dialkyl anilines) of formula

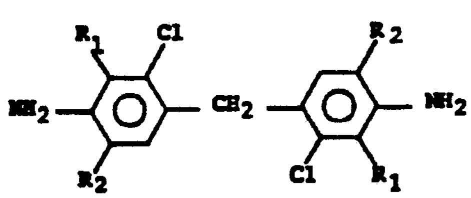

1

wherein $R_1$ is alkyl, the same or different, straight-chained or branched, having 1 to 4 carbon atoms, and $R_2$ is chlorine or alkyl, the same or different, straight-chained or branched, having 1 to 4 carbon atoms.

2. 4,4'-Methylene-bis-(3-chloro-2,6-dialkyl aniline) compounds of the following formulae:

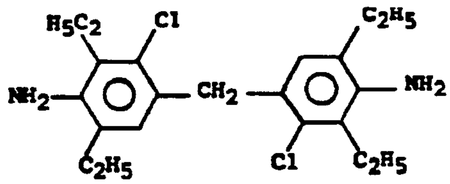

2

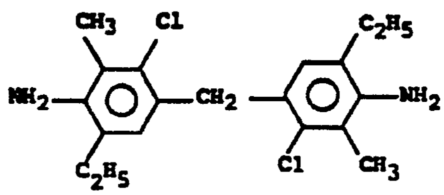

4

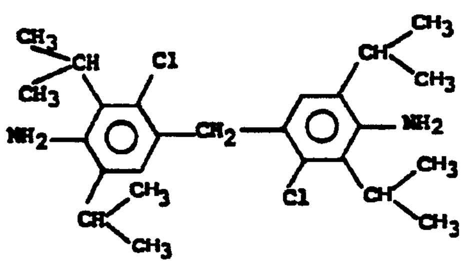

5

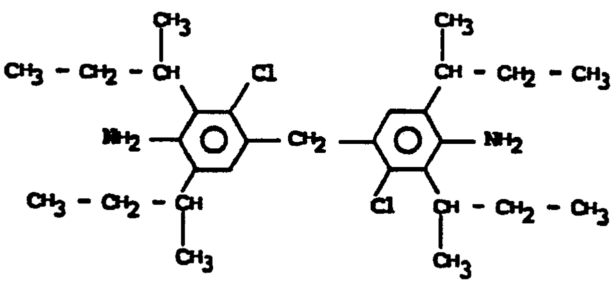

6

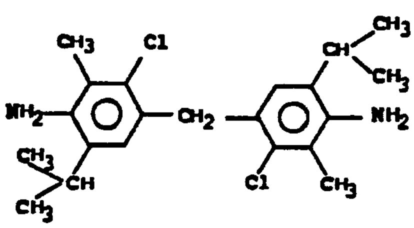

7

or

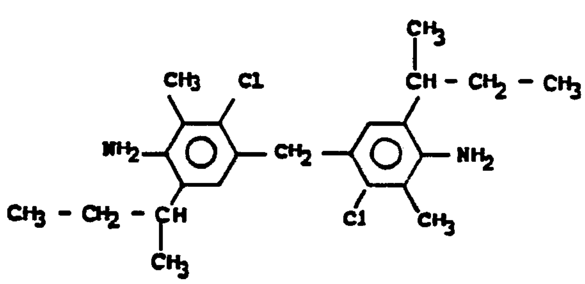

10

3. 4,4'-Methylene-bis-(5-chloro-2,6-dialkyl aniline) compounds of the following formulae:

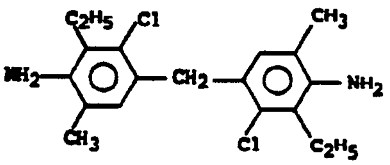

3

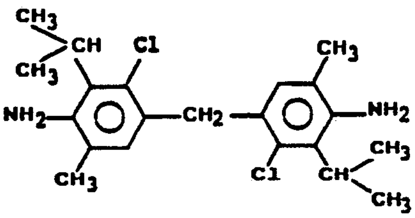

8

or

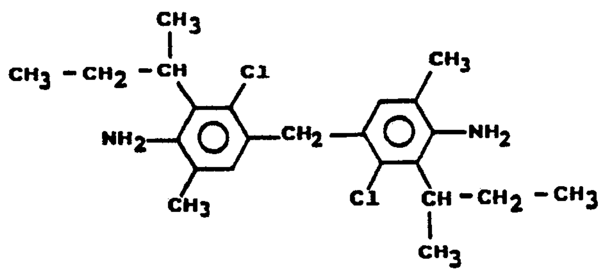

9

4. 4,4'-Methylene-bis-(2,5-dichloro-6-ethyl aniline) of the formula

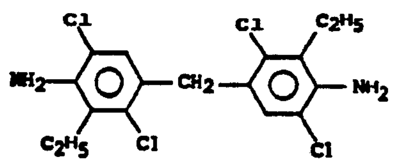

11

5. Process for preparing the compounds according to patent claim 1 to 4, characterized in that 3-chloro-aniline of the formula

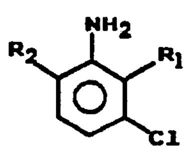

12

wherein $R_1$ and $R_2$ have the indicated meanings is reacted in the presence of strong inorganic acids with formaldehyde or reagents supplying formaldehyde.

6. Process according to patent claim 5, characterized in that as strong acids sulfuric acid or hydrochloric acid is used.

7. Process according to one or both of patent claims 5 to 6, characterized in that 1 mole of 3-chloro-aniline is reacted with 0.4 to 0.6 mole of formaldehyde, if desired from reagents supplying formaldehyde.

8. Process according to one or more of patent claims 5 to 7, characterized in that the reaction is additionally carried out in a solvent.

9. The use of compounds according to one or more of patent claims 1 to 8 as chain extending agents or crosslinking agents for polyurethanes.

10. The use of compounds of formula

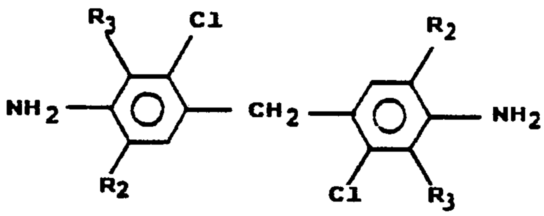

13

wherein $R_2$ has the meaning mentioned in claim 1 and $R_3$ is alkyl having 1 to 2 carbon atoms, as chain extending agents or crosslinking agents for polyurethanes.

**Revendications**

1. 4,4'-méthylène-bis-(méta-chloro-2,6-dialkylaniline) répondant à la formule:

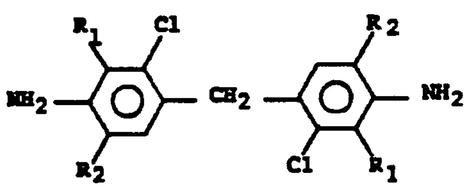

1

dans laquelle $R_1$ est un groupe alkyle, identique ou différent, linéaire ou ramifié, en $C_1$ à $C_4$, et $R_2$ est un atome de chlore ou un groupe alkyle, identique ou différent, linéaire ou ramifié, en $C_1$ à $C_4$.

2. 4,4'-méthylène-bis-(3-chloro-2,6-dialkylanilines) répondant aux formules suivantes:

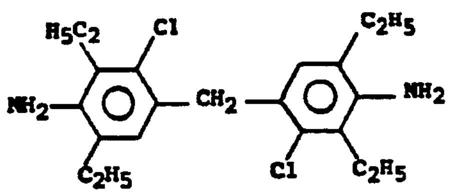

2

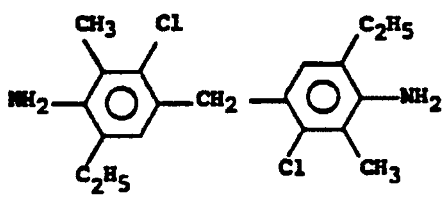

4

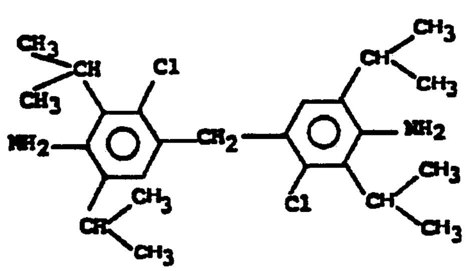

5

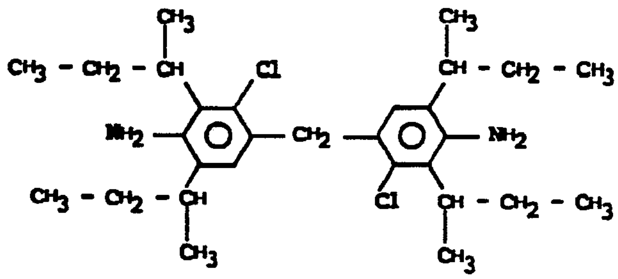

6

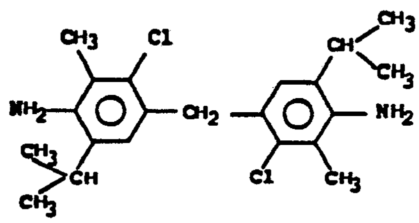

7

ou

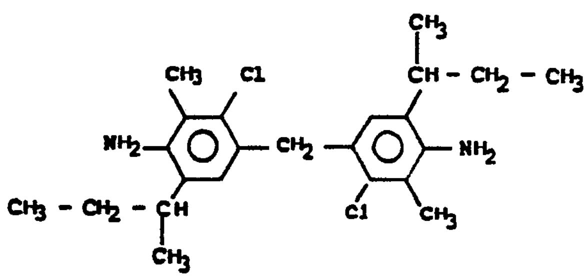

10

3. 4,4'-méthylène-bis-(5-chloro-2,6-dialkylanilines) répondant aux formules suivantes:

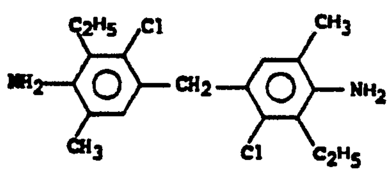

3

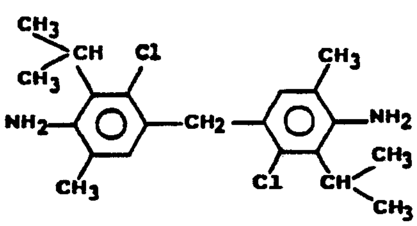

8

ou

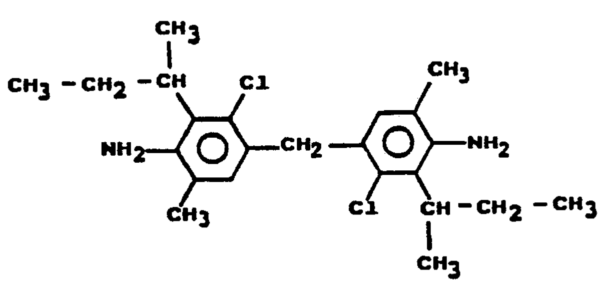

9

4. 4,4'-méthylène-bis-(2,5-dichloro-6-éthylaniline) répondant à la formule:

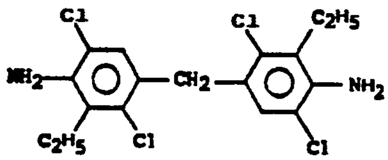

11

5. Procédé de préparation des composés suivant les revendications 1 à 4, caractérisé en ce qu'on fait réagir des 3-chloranilines répondant à la formule

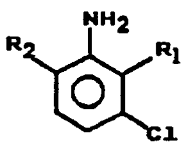

12

dans laquelle $R_1$ et $R_2$ ont les significations indiquées, en présence d'acides minéraux forts, avec du formaldéhyde ou des agents fournissant du formaldéhyde.

6. Procédé suivant la revendication 5, caractérisé en ce qu'on utilise comme acides forts l'acide sulfurique ou l'acide chlorhydrique.

7. Procédé suivant une des revendications 5 et 6 ou les deux, caractérisé en ce qu'on fait réagir 1 mole de 3-chloraniline avec 0,4 à 0,6 mole de formaldéhyde, le cas échéant à partir d'agents fournissant du formaldéhyde.

8. Procédé suivant une ou plusieurs des revendications 5 à 7, caractérisé en ce qu'on effectue en outre la réaction dans un solvant.

9. Utilisation des composés suivant une ou plusieurs des revendications 1 à 8 comme agents de prolongation des chaînes ou comme agents de réticulation pour les polyuréthanes.

10. Utilisation des composés répondant à la formule

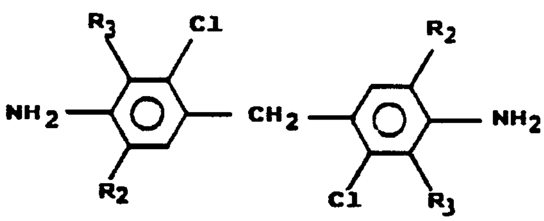

13

ans laquelle $R_2$ a la signification indiquée dans la revendication 1 et $R_3$ est un groupe alkyle en $C_1$ à $C_2$ comme agents de prolongation des chaînes ou agents de réticulation pour les polyuréthanes.